## Europäisches Patentamt
## European Patent Office
## Office européen des brevets

(11) Veröffentlichungsnummer: **0 026 357**
**B1**

# EUROPÄISCHE PATENTSCHRIFT

(45) Veröffentlichungstag der Patentschrift:
**18.05.83**

(21) Anmeldenummer: **80105301.8**

(22) Anmeldetag: **04.09.80**

(51) Int. Cl.³: **H 02 H 3/347,** H 02 H 3/16,
H 02 H 3/32, H 01 H 47/18

(54) Fehlerstromschutzschalter mit vormagnetisiertem Kern.

(30) Priorität: **26.09.79 DE 2938971**

(43) Veröffentlichungstag der Anmeldung:
**08.04.81 Patentblatt 81/14**

(45) Bekanntmachung des Hinweises auf die Patenterteilung:
**18.05.83 Patentblatt 83/20**

(84) Benannte Vertragsstaaten:
**AT FR GB IT NL**

(56) Entgegenhaltungen:
**CH-A-252 903**
**DE-A-1 588 292**
**DE-A-2 043 007**
**DE-A-2 845 993**
**DE-B-1 069 782**
**DE-C-1 061 443**

(73) Patentinhaber: **SIEMENS AKTIENGESELLSCHAFT,
Berlin und München Wittelsbacherplatz 2,
D-8000 München 2 (DE)**

(72) Erfinder: **Harr, Dieter, Dipl.-Ing., Friedrich
Ebertstrasse 63, D-8400 Regensburg (DE)**
Erfinder: **Westermayer, Rudolf, Dipl.-Ing., Rennweg 4g,
D-8400 Regensburg (DE)**

### Fehlerstromschutzschalter mit vormagnetisiertem Kern

Die Erfindung betrifft einen Fehlerstromschutzschalter, dessen Kern des Summenstromwandlers durch einen Ruhestrom vormagnetisiert ist, der aus dem zu überwachenden Netz über eine Speiseschaltung gewonnen wird, wobei eine Veränderung des magnetischen Flusses im Kern infolge Fehlerstroms den elektrischen Widerstand des Auslösekreises so verändert, dass darin ein zum Ansprechen des Auslöserelais führender Strom fliessen kann.

Fehlerstromschutzschalter der geschilderten Gattung sind bekannt (DE-A-2 043 007). Solche elektronischen Fehlerstromschutzschalter, die bei glattem Gleichstromfehlerstrom auslösen können, arbeiten mit einer Vormagnetisierung des Wandlers durch einen Ruhestrom in der Sekundärwicklung, also im Auslösekreis. Bei Überlagerung mit Gleichstromfehlerstrom von der Primärseite her ergibt sich eine einseitige Verschiebung des Magnetisierungszustandes in die Sättigung. Vom Auslösekreis her gesehen bedeutet das eine Erniedrigung des Widerstandes, so dass bei erhöhter Stromstärke das Auslöserelais ansprechen kann.

Solche elektronischen Fehlerstromschutzschalter werden üblicherweise mit der Netzfrequenz von 50 Hz vormagnetisiert. Bei Ausfall der Netzspannungsversorgung kann die Remanenzinduktion des für den Ringkern verwandten magnetischen Materials in einem der beiden Remanenzpunkte erhalten bleiben. Wenn die Netzspannungsversorgung dann wiederkehrt, kann es zu einer Addition der magnetischen Spannung zu der des vorhergehenden Zustandes kommen. Die dadurch eintretende Sättigung führt zur Auslösung, indessen bei einer Subtraktion keine Auslösung erfolgt. Die geschilderte Auslösung bedeutet eine Fehlauslösung, die vom Zufall abhängt. Die geschilderten Verhältnisse treten auch dann auf, wenn die Vormagnetisierung durch einen freilaufenden Generator erzeugt wird, was in der Praxis allerdings nicht als so störend empfunden wird.

Der Erfindung liegt die Aufgabe zugrunde, einen Fehlerstromschutzschalter der eingangs geschilderten Art zu entwickeln, bei dem das zufällige Fehlauslösen vermieden ist. Die Lösung der geschilderten Aufgabe besteht darin, dass Vorkehrungen zur Unterdrückung der ersten Halbwelle des Vormagnetisierungsstromes nach Wiedereinschalten des Netzes in der Speiseschaltung oder im Auslösekreis getroffen sind. Dadurch wird entweder die Vormagnetisierung während der ersten Halbwelle unterdrückt oder man unterbindet den Stromfluss durch das Auslöserelais.

Nach einer Ausgestaltung wird in der Speiseschaltung ein Heissleiter in den Pfad zum Kern des Summenstromwandlers eingeschaltet. Erst wenn der Heissleiter einen niedrigeren Widerstand annimmt, kann die Speiseschaltung einen nennenswerten Strom durch den Auslösekreis treiben.

Die Speiseschaltung kann so ausgebildet sein, dass der Auslösekreis einerseits mit dem Nulleiter verbunden ist und andererseits mit einem Phasenleiter, indem dieser mit dem Heissleiter und einem konstanten Vorwiderstand verbunden ist, von dem eine Verbindung zum Nulleiter einerseits über zwei in Antiserie geschaltete Zenerdioden und andererseits über zwei Widerstände hergestellt ist, von denen der mit dem Nulleiter verbundene Widerstand auch Teil des Auslösekreises ist.

Nach einer Weiterbildung, bei der man den verhältnismässig aufwendigen Heissleiter vermeidet, ist in der Speiseschaltung parallel zu Bauteilen zur Einkopplung des Stromes für die Vormagnetisierung eine Stromsaugschaltung angeordnet. In der Anlaufphase nach dem Wiedereinschalten wird dadurch im Auslösekreis von der Speiseschaltung her ein ansteigender Strom zur Vormagnetisierung zugeführt.

Wenn die Bauteile zur Einkopplung des Stromes für die Vormagnetisierung zwei in Antiserie angeordnete Zenerdioden sind, kann die Stromsaugschaltung eine Gleichrichterbrückenschaltung sein, in deren einem Zweig die Zenerdioden angeordnet sind und in deren anderem Zweig ein kondensatorgesteuertes Ventil liegt.

Eine andere wesentliche Weiterbildung besteht darin, dass im Auslösekreis im Pfad zum Auslöser ein elektronischer Unterbrecher angeordnet ist, dessen Unterbrechungszeit auf die der ersten Halbwelle des Vormagnetisierungsstromes eingestellt ist. Dadurch erhält das Auslöserelais in der Wiedereinschaltphase nicht den an sich infolge der magnetischen Überlagerung und des verminderten elektrischen Innenwiderstandes auftretenden erhöhten Strom.

Nach einer weiteren Ausgestaltung ist im Auslösekreis parallel zum Pfad zum Auslöserelais ein elektronischer Kurzschliesser angeordnet, dessen Kurzschliesszeit auf die der ersten Halbwelle des Vormagnetisierungsstromes eingestellt ist.

Die Erfindung soll anhand von in der Zeichnung grob schematisch wiedergegebenen Ausführungsbeispielen näher erläutert werden:

In Figur 1 ist ein Fehlerstromschutzschalter veranschaulicht, der mit einem Heissleiter in der Speiseschaltung arbeitet.

Figur 2 gibt ein Diagramm wieder, in dem der zeitliche Spannungsanstieg der Speiseschaltung für den Vormagnetisierungsstrom dargestellt ist.

In Figur 3 ist ein Fehlerstromschutzschalter in der Darstellungsweise nach Figur 1 wiedergegeben, der mit einer Stromsaugschaltung in der Speiseschaltung arbeitet.

In Figur 4 ist ein Fehlerstromschutzschalter der Darstellungsweise nach Figur 1 wiedergegeben, der mit einem elektronischen Unterbrecher im Auslösekreis arbeitet.

In Figur 5 ist in der Darstellungsweise nach Figur 1 ein Fehlerstromschutzschalter wiedergegeben, der mit einem elektronischen Kurzschliesser im Auslösekreis arbeitet.

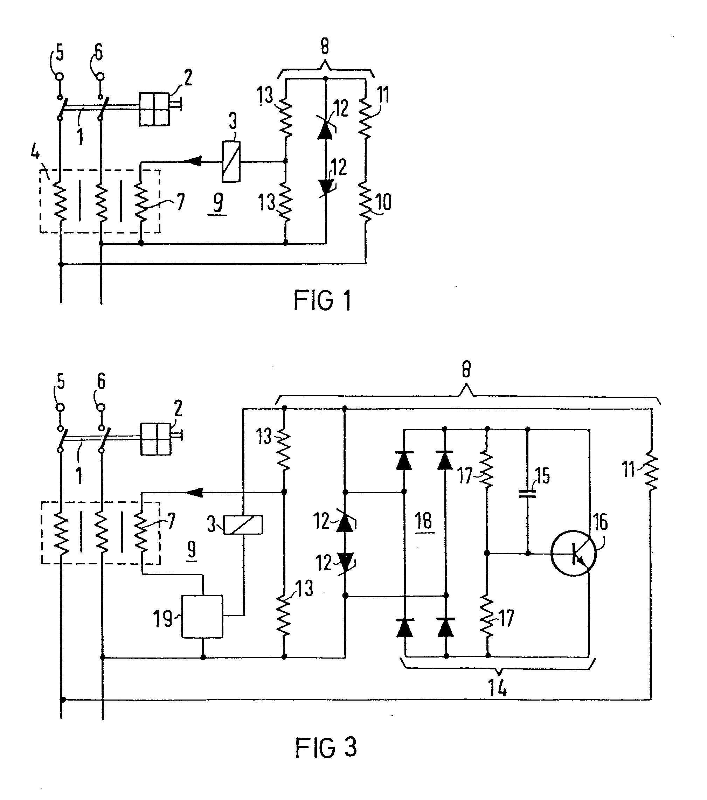

Der Fehlerstromschutzschalter nach Figur 1 weist Schaltkontakte 1 auf, die von einem Schaltschloss 2 betätigt werden, das seinerseits durch ein Auslöserelais 3 entklinkt wird. Die Fehlerströme werden von einem Summenstromwandler 4 als Residuum der Ströme, die durch die zu überwachenden Leiter, einen Phasenleiter 5 und einen Nulleiter 6 fliessen, erfasst. Die Auslösewicklung 7 des Sekundärkreises ist mit dem Auslöserelais 3 und einer Speiseschaltung 8 verbunden. Der Auslösekreis ist mit 9 bezeichnet. Die Speiseschaltung 8 weist einen in den Pfad zum Kern des Summenstromwandlers 4 eingeschalteten Heissleiter 10 auf.

Die Speiseschaltung 8 ist im einzelnen dadurch gebildet, dass der Auslösekreis 9 einerseits mit dem Nulleiter 6 verbunden ist und andererseits mit einem Phasenleiter 5. Hierzu ist der Phasenleiter 5 mit dem Heissleiter 10 und einem konstanten Vorwiderstand 11 verbunden, von dem eine Verbindung zum Nulleiter einerseits über zwei in Antiserie geschaltete Zenerdioden 12 und andererseits über zwei Widerstände 13 hergestellt ist. Der mit dem Nulleiter 6 verbundene Widerstand 13 ist auch Teil des Auslösekreises. Von einem Abgriff zwischen den Widerständen 13 führt eine Verbindung über das Auslöserelais 3 durch die Auslösewicklung 7 zurück zur anderen Seite des unteren Widerstandes 13.

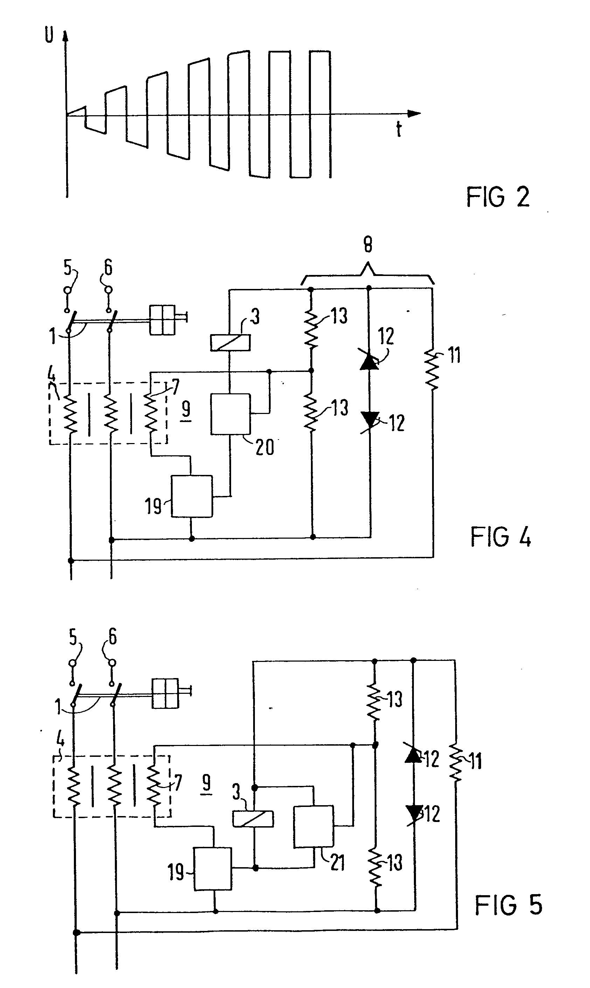

Die Wechselspannung für die Vormagnetisierung wird allgemein gesprochen über einen Vorwiderstand an den zwei in Antiserie geschalteten Zenerdioden 12 in alternierender rechteckähnlicher Kurvenform nach Figur 2 erzeugt. Diese Rechteckwechselspannung erhält durch die Vorkehrungen in der Speiseschaltung eine ansteigende Amplitude, wie es beispielsweise aus Figur 2 zu ersehen ist. Auf der Abszisse ist dort die Zeit und auf der Ordinate die Spannung aufgetragen.

Dieser Spannungsanstieg wird bei einem Fehlerstromschutzschalter nach Figur 1 durch den in Reihe zum Vorwiderstand 11 angeordneten Heissleiter 10 erzielt (man vergleiche Siemens-Heissleiter-Datenbuch 1975/76 Seite 35).

Durch den Heissleiter 10 in Reihe zum Vorwiderstand 11 wird nach dem Einschalten bei kaltem Heissleiter, also hohem Widerstand, den Zenerdioden 12 wenig Strom zugeführt. Damit kann an den Zenerdioden nur eine niedrige Wechselspannung anstehen. Wenn sich der Heissleiter 10 erwärmt, wird sein Widerstand kleiner, so dass er nur noch einen vernachlässigbaren Bruchteil des Vorwiderstandes 11 bildet. Damit steigt die Wechselspannung an den Zenerdioden 12 an.

Beim Fehlerstromschutzschalter nach Figur 3 wird in der Speiseschaltung 8 mit einer Stromsaugschaltung 14 gearbeitet, die parallel zu den Bauteilen zur Einkopplung des Stromes für die Vormagnetisierung, also parallel zu den Zenerdioden 12, angeordnet ist. Die Zenerdioden 12 sind wieder in Antiserie angeordnet und die Stromsaugschaltung ist im Ausführungsbeispiel als eine Gleichrichterbrückenschaltung 18 aufgebaut, in deren einem Zweig die Zenerdioden 12 und in deren anderem Zweig ein von einem Kondensator 15 gesteuertes Ventil 16 angeordnet ist. Die Steuerspannung für das Ventil 16 wird durch den zwischen Kollektor und Basis angeschlossenen Kondensator 15 und durch die spannungsteilenden Widerstände 17 erzielt, deren Mittenabgriff mit der einen Seite des Kondensators 15 und der Basis des Ventils 16 verbunden ist. Vom Emitter des Ventils 16 ist eine Verbindung zu der vom Kondensator 15 abgelegenen Seite der Widerstände 17 hergestellt.

Im Auslösekreis 9 ist eine Verbindung vom Mittenabgriff zwischen den spannungsteilenden Widerständen 13 über die Auslösewicklung 7 zu einem elektronischen Verstärker 19 zum Nulleiter 6 hergestellt. Dieser Verstärker 19 liegt im Pfad des Auslöserelais 3, das an seinem anderen Ende mit der vom Nulleiter 6 abgewandten Seite der Vorwiderstände 13 verbunden ist.

Bei einem Fehlerstromschutzschalter nach Figur 3 ist das Ventil 16 bei entladenem Kondensator 15 leitend gesteuert. Dadurch fliesst der vom Vorwiderstand 11 kommende Strom in der Anfangsphase überwiegend durch das Ventil 16. Wenn sich der Kondensator 15 zunehmend auflädt, wird das Ventil 16 zunehmend in den Sperrzustand gesteuert, so dass immer weniger Strom über das Ventil 16 fliessen kann. Wenn das Ventil 16 gesperrt ist, steht an der Gleichrichterbrückenschaltung 18 die volle Spannung an, so dass über die Zenerdioden 13 ein Strom in voller Stärke erzielt ist. Im Auslösekreis fliesst dann der volle Vormagnetisierungsstrom.

Wenn das Netz ausfällt, wird der Kondensator 15 über den zu ihm parallel liegenden Widerstand 17 entladen. Dieser Widerstand 17 kann so bemessen werden, dass die Stromsaugschaltung 14 nach einigen Millisekunden bis einigen hundert Millisekunden wieder einsatzbereit zum Stromabsaugen bei wiederkehrender Netzspannung ist. Ein Fehlerstromschutzschalter mit einer solchen Absaugschaltung ist besonders wirtschaftlich.

Eine andere Lösung der geschilderten Aufgabe besteht darin, dass im Auslösekreis eines Fehlerstromschutzschalters nach Figur 4 im Pfad zum Auslöserelais 3 ein elektronischer Unterbrecher 20 angeordnet ist, dessen Unterbrechungszeit zumindest auf die der ersten Halbwelle eingestellt ist. Das Steuersignal erhält der elektronische Unterbrecher 20 vom Mittenabgriff zwischen den spannungsteilenden Widerständen 13. Im übrigen entspricht der Aufbau des Auslösekreises 9 dem des Fehlerstromschutzschalters nach Figur 3. Der elektronische Verstärker 19 verstärkt den Stromfluss durch das Auslöserelais 3, wenn der elektronische Unterbrecher 20 sich im nichtunterbrechenden Zustand befindet.

Bei Wiedereinschalten des Netzes nach einem Netzausfall führt zwar die erste Halbwelle des Vormagnetisierungsstromes zu einer magnetischen Überlagerung im Summenstromwandler 4, die zum Auslösen des Fehlerstromschutzschalters führen könnte; der dem Auslöserelais 3 zugeführte Strom wird jedoch vom elektronischen Unterbrecher 20 unterbrochen. Dadurch wird eine Fehlauslösung des Fehlerstromschutzschalters vermieden und der Fehlerstromschutzschalter im Falle eines Fehlerstromes einsatzbereit.

Beim Fehlerstromschutzschalter nach Figur 5 ist im Auslösekreis 9 parallel zum Pfad zum Auslöserelais 3 ein elektronischer Kurzschliesser 21 angeordnet, dessen Kurzschliesszeit auf die der ersten Halbwelle eingestellt ist. Solange der elektronische Kurzschliesser 21 das Auslöserelais 3 kurzschliesst, kann dieses also nicht arbeiten. Wenn das Auslöserelais 3 betriebsbereit ist, braucht über den elektronischen Kurzschliesser 21 andererseits kein Strom zu fliessen, so dass eine solche Schaltungsausführung besonders sparsam arbeitet. Die grundsätzliche Wirkungsweise ist im übrigen wie bei der Ausbildung nach Figur 4.

**Patentansprüche**

1. Fehlerstromschutzschalter, dessen Kern des Summenstromwandlers (4) durch einen Ruhestrom vormagnetisiert ist, der aus dem zu überwachenden Netz über eine Speiseschaltung (8) gewonnen wird, wobei eine Veränderung des magnetischen Flusses im Kern infolge Fehlerstroms den elektrischen Widerstand des Auslösekreises (9) so verändert, dass darin ein zum Ansprechen des Auslöserelais (3) führender Strom fliessen kann, dadurch gekennzeichnet, dass Vorkehrungen zur Unterdrückung der ersten Halbwelle des Vormagnetisierungsstromes nach Wiedereinschalten des Netzes in der Speiseschaltung (8) oder im Auslösekreis (9) getroffen sind.

2. Fehlerstromschutzschalter nach Anspruch 1, dadurch gekennzeichnet, dass in der Speiseschaltung (8) ein Heissleiter (10) in den Pfad zum Kern des Summenstromwandlers (4) eingeschaltet ist.

3. Fehlerstromschutzschalter nach Anspruch 2, dadurch gekennzeichnet, dass die Speiseschaltung (8) dadurch gebildet ist, dass der Auslösekreis (9) einerseits mit dem Nulleiter (6) verbunden ist und andererseits mit einem Phasenleiter (5), indem dieser mit dem Heissleiter (10) und einem konstanten Vorwiderstand (11) verbunden ist, von dem eine Verbindung zum Nulleiter (6) einerseits über zwei in Antiserie geschaltete Zenerdioden (12) und andererseits über zwei Widerstände (13) hergestellt ist, von denen der mit dem Nulleiter verbundene Widerstand (13) auch Teil des Auslösekreises (9) ist.

4. Fehlerstromschutzschalter nach Anspruch 1, dadurch gekennzeichnet, dass in der Speiseschaltung (8) parallel zu Bauteilen zur Einkopplung des Stromes für die Vormagnetisierung eine Stromsaugschaltung (14) angeordnet ist.

5. Fehlerstromschutzschalter nach Anspruch 4, dadurch gekennzeichnet, dass die Bauteile zur Einkopplung des Stromes für die Vormagnetisierung zwei in Antiserie geschaltete Zenerdioden (12) sind und dass die Stromsaugschaltung (14) eine Gleichrichterbrückenschaltung (18) ist, in deren einem Zweig die Zenerdioden (12) angeordnet sind und in deren anderem Zweig ein kondensatorgesteuertes Ventil (16) liegt.

6. Fehlerstromschutzschalter nach Anspruch 1, dadurch gekennzeichnet, dass im Auslösekreis (9) im Pfad zum Auslöserelais (3) ein elektronischer Unterbrecher (20) angeordnet ist, dessen Unterbrechungszeit auf die der ersten Halbwelle des Vormagnetisierungsstromes eingestellt ist.

7. Fehlerstromschutzschalter nach Anspruch 1, dadurch gekennzeichnet, dass im Auslösekreis (9) parallel zum Pfad zum Auslöserelais (3) ein elektronischer Kurzschliesser (21) angeordnet ist, dessen Kurzschliesszeit auf die der ersten Halbwelle des Vormagnetisierungsstromes eingestellt ist.

**Claims**

1. Earth fault current circuit breaker, the core of the core balance transformer (4) of which is pre-magnetised by a quiescent current derived from the system to be monitored by way of a feed circuit (8), wherein a variation of the magnetic flux in the core due to a fault current so changes the electrical resistance of the tripping circuit (9) that there can flow therein a current causing the tripping relay (3) to operate, characterised in that provision is made in the feed circuit (8) or in the tripping circuit (9) for suppressing the first half-cycle of the premagnetising current after restoration of the mains supply.

2. Earth fault current circuit breaker according to claim 1, characterised in that, in the feed circuit (8), a thermistor (10) is provided in the path to the core of the core balance transformer (4).

3. Earth fault current circuit breaker according to claim 2, characterised in that the feed circuit (8) is formed by connection of the tripping circuit (9) on the one hand to the neutral conductor (6) and on the other hand to a phase conductor (5), the latter being connected to the thermistor (10) and to a constant series resistor (11), from which a connection is made to the neutral conductor (6) on the one hand through two Zener diodes (12) connected in anti-series and on the other hand through two resistors (13), of which the one resistor (13) connected to the neutral conductor is also part of the tripping circuit (9).

4. Earth fault current circuit breaker according to claim 1, characterised in that, in the feed circuit (8), a current drainage circuit (14) is provided in parallel with component parts for the introduction of the current for the premagnetisation.

5. Earth fault current circuit breaker according to claim 4, characterised in that the components for introducing the current for the premagnetisation are two Zener diodes (12) connected in anti-series, and in that the current drainage circuit (14) is a rectifier bridge arrangement (18), in one arm of which the Zener diodes (12) are provided, while a capacitor-controlled rectifier element (16) lies in its other arm.

6. Earth fault current circuit breaker according to claim 1, characterised in that, in the tripping circuit (9), there is provided in the path to the tripping relay (3) an electronic interrupter (20), of which the interruption time is set to that of the first half-cycle of the premagnetising current.

7. Earth fault current circuit breaker according to claim 1, characterised in that, in the tripping circuit (9), there is provided in parallel with the path to the tripping relay (3) an electronic short-circuiting device (21), of which the short-circuiting time is set to that of the first half-cycle of the premagnetising current.

**Revendications**

1. Disjoncteur de protection à courant de défaut dont le noyau du transformateur de sommation (41) est pré-aimanté par un courant de repos qui est obtenu à partir du réseau à surveiller, par l'intermédiaire d'un circuit d'alimentation (8), une modification du flux magnétique dans le noyau changeant, par suite d'un courant de défaut, de telle façon la résistance électrique du circuit de déclenchement (9) qu'il y passe un courant entraînant la réponse du relais de déclenchement (3), caractérisé par le fait que des moyens sont prévus pour supprimer la première al-

ternance du courant de pré-aimantation, après rebranchement du réseau dans le circuit d'alimentation (8) ou dans le circuit de déclenchement (9).

2. Disjonction de protection à courant de défaut selon la revendication 1, caractérisé par le fait que dans le circuit d'alimentation (8), une thermistance (10) est montée dans la piste conductrice menant au noyau du transformateur de sommation (4).

3. Disjoncteur de protection à courant de défaut selon la revendication 2, caractérisé par le fait que le circuit d'alimentation (8) est formé par le fait que le circuit d'alimentation (9) est d'une part relié au conducteur neutre (6) et d'autre part à un conducteur de phase (5), ce dernier étant relié avec la thermistance (10) et une résistance de chute constante (6), à partir de laquelle est établie une liaison menant au conducteur neutre (6), d'une part, par l'intermédiaire de deux diodes Zener (12) montées en série et en opposition et, d'autre part, par l'intermédiaire de deux résistances (13) parmi lesquelles la résistance (13) qui est reliée au conducteur neutre est également un élément du circuit de déclenchement (9).

4. Disjoncteur de protection à courant de défaut selon la revendication 1, caractérisé par le fait que dans le circuit d'alimentation (8), et en parallèle sur des éléments constitutifs servant au couplage du courant pour la pré-aimantation, est monté un circuit suceur de courant (14).

5. Disjoncteur de protection à courant de défaut selon la revendication 4, caractérisé par le fait que les éléments constitutifs servant au couplage du courant pour la pré-aimantation sont deux diodes Zener (12) montées en série et en opposition, et que le circuit suceur de courant (14) est un circuit redresseur en pont (18) dans l'une des branches duquel sont disposées les diodes Zener (12) et dans l'autre branche duquel est située une soupape électrique (16) commandée par un condensateur.

6. Disjoncteur de protection à courant de défaut selon la revendication 1, caractérisé par le fait que dans le circuit de déclenchement (9), et dans la piste menant au relais de déclenchement (3), est disposé un interrupteur électronique (20) dont le temps de coupure est réglé sur la première alternance du courant de pré-aimantation.

7. Disjoncteur de protection à courant de défaut selon la revendication 1, caractérisé par le fait que dans le circuit de déclenchement (9) et en parallèle sur le relais de déclenchement (3) est disposé un dispositif électronique de court-circuit (21) dont le temps de coupure est réglé sur la première alternance du courant de pré-aimantation.

FIG 1

FIG 3

7

FIG 2

FIG 4

FIG 5